# FASCICULE DE BREVET EUROPEEN

(11) **EP 1 212 755 B1**
(45) Date de publication et mention de la délivrance du brevet: **10.05.2006**
(21) Numéro de dépôt: 01965379.9
(22) Date de dépôt: 30.08.2001
(51) Int. Cl.: G21C 19/07, G21F 5/012

(54) **PANIER DE RANGEMENT POUR MATIERES RADIOACTIVES**
SPEICHERRAHMEN ZUR SPEICHERUNG VON RADIOAKTIVEN STOFFEN
STORAGE CONTAINER FOR RADIOACTIVE MATERIALS

(30) Priorité: 01.09.2000 FR 0011179
(43) Date de publication de la demande: 12.06.2002
(73) Titulaire: COGEMA LOGISTICS, 78182 St. Quentin en Yvelines Cedex (FR)
(72) Inventeur: DALLONGEVILLE, Maurice, F-91360 EPINAY sur ORGE (FR); VALLENTIN, Christophe, F-27290 ECAQUELON (FR)
(74) Mandataire: Poulin, Gérard
(86) Numéro de dépôt international: PCT/FR2001/002700
(87) Numéro de publication internationale: WO 2002/019343

(56) Documents cités:
- EP-A- 0 248 214
- EP-A- 0 520 438
- WO-A-95/26030
- FR-A- 2 211 720
- GB-A- 2 289 007
- US-A- 4 827 139
- US-A- 4 930 650
- PATENT ABSTRACTS OF JAPAN vol. 1997, no. 08, 29 août 1997 (1997-08-29) & JP 09 105798 A (MITSUBISHI HEAVY IND LTD), 22 avril 1997 (1997-04-22)

## Description

### Domaine technique

L'invention concerne un panier de rangement comportant une pluralité d'alvéoles adjacents, dont chacun est destiné à recevoir des matières radioactives conditionnées, telles que des éléments combustibles de réacteurs nucléaires ou autres.

Le panier de rangement selon l'invention peut notamment être utilisé pour assurer le transport ou le stockage, en ambiance sèche ou humide, d'éléments combustibles de réacteurs nucléaires ou de toutes autres matières nucléaires. A cet effet, le panier selon l'invention peut notamment être placé dans un conteneur de transport ou de stockage, dans une piscine de réacteur nucléaire ou à l'intérieur d'un bâtiment. Il peut aussi être enfoui dans les couches géologiques.

Par ailleurs, l'invention est particulièrement adaptée à la réalisation de paniers compacts ayant une section droite polygonale régulière, par exemple hexagonale. De tels paniers peuvent notamment recevoir, dans un volume optimisé, des éléments combustibles à section hexagonale tels que les éléments de type VVER utilisés dans certains réacteurs nucléaires. Bien entendu, le panier selon l'invention peut aussi être formé d'alvéoles de section plus simple, par exemple carrée ou rectangulaire, aptes à recevoir notamment des éléments combustibles tels que ceux qui sont utilisés couramment dans les réacteurs nucléaires à eau légère.

### Etat de la technique

Les éléments combustibles des réacteurs nucléaires ainsi que les autres matières radioactives que l'on désire transporter ou stocker sont généralement disposés, au préalable, dans des réceptacles ou alvéoles d'un panier (aussi appelé casier ou râtelier) destiné à être lui-même placé dans la cavité intérieure d'un conteneur de transport ou de stockage, ou dans une installation de stockage appropriée.

Les paniers de ce type doivent remplir diverses fonctions. Ces fonctions comprennent notamment la résistance mécanique et le calage des matières radioactives, ainsi que l'aptitude à être manutentionné.

De plus, selon la nature des matières radioactives, le panier doit assurer différentes fonctions liées à la sûreté nucléaire du transport ou du stockage. Parmi ces fonctions, on citera principalement la nécessité d'évacuer le flux de chaleur produit par les matières contenues dans le panier et le contrôle de la criticité nucléaire, lorsque ces matières sont des matières fissiles susceptibles de provoquer une réaction en chaîne.

La fonction de résistance mécanique a pour but de maintenir la géométrie du panier lors des opérations de manutention, sous l'effet des accélérations rencontrées en cours de transport, mais aussi en cas de choc ou de chute accidentelle, pour conserver le contrôle de la criticité nucléaire dans de telles circonstances.

Les paniers existants comportent habituellement des alvéoles rectilignes délimités le plus souvent par des cloisons composites de type sandwich, formées de couches successives de différents matériaux, plaquées les unes sur les autres de telle sorte que chacune d'entre elles remplit au moins l'une des fonctions précitées.

Ainsi, on prévoit par exemple une couche d'un métal bon conducteur de la chaleur, tel que l'aluminium, le cuivre, et leurs alliages, une couche d'un matériau de structure, apte à assurer la résistance mécanique du panier en cas de choc accidentel, et une couche d'un matériau contenant un élément absorbeur de neutrons tel que le bore ou le cadmium. Le matériau de structure peut notamment être un acier inoxydable, un acier au carbone, un aluminium ou ses alliages. Le matériau incorporant l'élément neutrophage est le plus souvent un acier inoxydable, un aluminium ou ses alliages, ou encore un matériau fritté, par exemple à base de carbure de bore B₄C. Dans le cas de l'acier inoxydable ou de l'aluminium, l'élément neutrophage est souvent introduit directement dans ce matériau, sans que sa résistance mécanique soit fortement diminuée. Une seule couche de matériau suffit alors à assurer la résistance mécanique et le contrôle de la criticité.

Dans un premier type de paniers existants, les cloisons composites des alvéoles sont obtenues en juxtaposant et en entrecroisant, dans le sens longitudinal des alvéoles, des éléments plats ou profilés, appelés "bandes". Chaque bande est alors composée d'un placage multicouche de matériaux tels que ceux précités. Pour assurer un empilement régulier et robuste dans le sens longitudinal, il est également connu de munir les bandes d'encoches coopérant les unes avec les autres, de telle sorte que les bandes s'entrecroisent perpendiculairement à l'axe des alvéoles et soient solidaires les unes des autres.

Dans un autre type de paniers existants, les bandes composites sont remplacées par des couches successives de différents matériaux, alternées dans le sens longitudinal des alvéoles. Plus précisément, on empile alors alternativement des bandes de même géométrie, fabriquées dans des matériaux différents, de façon à réaliser dans le sens longitudinal une succession de composants remplissant chacun au moins l'une des fonctions précitées. Le document EP-A-0 329 581 décrit un panier réalisé de cette manière.

Dans certains cas et sous certaines conditions, il est connu de réaliser un panier en n'utilisant qu'un seul matériau. Par exemple, l'aluminium est un métal bon conducteur de la chaleur, auquel on peut facilement incorporer un élément absorbeur de neutrons tel que le bore. Pour donner aux éléments d'aluminium une résistance mécanique suffisamment élevée, on réalise alors ces éléments sous la forme de plaques d'épaisseur suffisante ou de poutrelles à section droite rigide en forme de H ou de U.

Toutefois, la réduction du nombre des matériaux employés, qui permet de simplifier la fabrication et de réduire les coûts, conduit souvent, en contrepartie, à certaines diminutions de performances. Ainsi, dans l'exemple précité d'un panier entièrement composé d'un empilement de composants en aluminium, il est difficile d'assurer la tenue mécanique, en particulier à des températures élevées telles qu'on peut les rencontrer dans un panier contenant des matières radioactives. De ce fait, il faut augmenter l'épaisseur des composants en aluminium ou leur donner des formes particulières épaisses, comme indiqué précédemment. Il en découle un surplus de poids et d'encombrement du panier, qui est préjudiciable, à moins de réduire le nombre des alvéoles et donc la capacité du panier.

A l'inverse, lorsqu'il est nécessaire de réaliser un panier hautement performant, par exemple du fait de la nature des matières radioactives ou du fait de contraintes strictes de masse et d'encombrement, les paniers présentant une structure composite, c'est-à-dire formée de plusieurs matériaux adaptés à chacune des fonctions, sont généralement mieux adaptés, malgré leur complexité et leur coût plus élevé.

Quel que soit le nombre des matériaux utilisés, la fabrication des paniers existants soulève des difficultés. En effet, les bandes doivent être fabriquées avec une très grande précision, afin qu'elles puissent être parfaitement alignées lorsqu'elles sont empilées. Cette condition est indispensable pour obtenir des alvéoles de section constante et aux parois parfaitement lisses, permettant d'éviter tout risque d'accrochage lors de l'introduction et de l'extraction des matières radioactives. De plus, lorsque les bandes comportent des encoches, l'usinage de celles-ci doit être très précis avec un faible jeu de montage, pour procurer au panier la rigidité requise sans nuire à l'alignement des bandes.

Lorsque les alvéoles présentent une section carrée ou rectangulaire, des usinages de précision permettent de maîtriser ces difficultés, pour un coût non négligeable. Comme l'illustre la figure 6 du document EP-A-0 329 581, lorsque le panier comporte des alvéoles de ce type, on utilise souvent des bandes d'un seul tenant qui traversent de part en part la section droite du panier, sans qu'il y ait discontinuité de matière entre les cloisons des alvéoles adjacents. Cette configuration est favorable à la cohésion et à la résistance mécanique du panier.

La mise en oeuvre de ces techniques est beaucoup plus difficile dans le cas de paniers présentant des alvéoles polygonaux (par exemple hexagonaux) ayant un plus grand nombre de côtés. En effet, si l'on prend l'exemple d'alvéoles hexagonaux, il faut alors utiliser des éléments de bandes pliés en forme de ligne brisée, qu'on ordonne ensuite selon les directions appropriées, comme l'illustre la figure 5 du document EP-A-0 329 581 déjà cité. Dans ce cas, il n'est pas possible d'utiliser des bandes d'un seul tenant traversant la section droite du panier et on doit donc placer un grand nombre d'éléments de bandes dans cette section droite. La discontinuité des éléments de bandes qui découle de cet agencement a pour effet de diminuer la rigidité transversale et donc la résistance mécanique d'ensemble du panier. La multiplication du nombre des éléments de bandes ainsi que leurs formes comportant des pliures ont aussi pour conséquence d'augmenter considérablement les difficultés de fabrication et de montage exposées auparavant. En effet, étant donné que l'on doit ensuite dupliquer et empiler tous ces éléments de bande sur toute la hauteur du panier, l'obtention d'alvéoles de section constante et aux parois lisses n'est alors possible que grâce à des fabrications spéciales réduisant au minimum les tolérances de dimensions et les jeux de montage. Cela conduit à des coûts de fabrication très élevés.

Comme l'illustre le document EP-A-0 752 151, il est également connu de réaliser un panier formé d'alvéoles de section polygonale régulière en assemblant un faisceau de tubes métalliques rectilignes identiques ayant chacun cette section. Les tubes peuvent être réalisés en une seule pièce, à la forme et aux dimensions voulues et avec des coûts de fabrication raisonnables, en utilisant les techniques usuelles d'extrusion. La longueur des tubes est choisie avantageusement égale à la hauteur du panier, ce qui contribue à faciliter le montage et à réduire lés coûts. Le maintien de la compacité et de la cohésion du faisceau de tubes est alors assuré par des moyens d'assemblage tels que des structures de cerclage entourant le faisceau et répartis sur toute la hauteur de celui-ci.

L'agencement décrit dans le document EP-A-0 752 151 a pour principal inconvénient d'être limité à des tubes réalisés en un matériau unique. Ce matériau doit alors être apte à remplir toutes les fonctions indiquées précédemment. Comme on l'a déjà observé, l'emploi d'un matériau unique présente des avantages en termes de fabrication et de réduction des coûts, mais peut conduire à une diminution des performances du panier, et notamment de sa capacité de rangement, pour respecter des contraintes de poids et d'encombrement.

En conclusion, aucune des techniques de fabrication actuelles des paniers de rangement pour matières radioactives ne permet de remplir de manière simple et optimale toutes les fonctions requises sans réduire les performances du panier, notamment en termes de capacité de rangement, quelles que soient les formes des alvéoles, y compris dans le cas de formes polygonales quelconques telles que des formes hexagonales.

### Exposé de l'invention

L'invention a précisément pour objet un panier de rangement apte à recevoir des matières radioactives, telles que des éléments combustibles de réacteurs nucléaires, en remplissant de manière optimisée toutes les fonctions requises pour un tel panier, telles que le contrôle de la criticité, le transfert thermique et la résistance mécanique, quelles que soient les formes des alvéoles, tout en conservant ou en améliorant la capacité de rangement des paniers existants.

Conformément à l'invention, ce résultat est obtenu grâce à un panier de rangement pour matières radioactives, comprenant une pluralité de tubes métalliques rectilignes agencés en faisceau et des moyens d'assemblage regroupant les tubes parallèlement les uns aux autres, selon un réseau régulier, de façon à former une pluralité d'alvéoles adjacents, aptes à recevoir lesdites matières radioactives, chacun des tubes matérialisant une première paroi sensiblement continue d'un alvéole correspondant, ledit panier étant caractérisé en ce qu'il comprend de plus une pluralité de croisillons métalliques incluant chacun au moins trois ailes reliées entre elles par une arête commune, les croisillons étant placés entre les tubes de façon à définir, autour de la première paroi de chaque alvéole et en contact au moins partiel avec celle-ci, une deuxième paroi sensiblement continue.

Du fait que chacun des alvéoles est délimité par une première paroi matérialisée par le tube qui l'entoure et par une deuxième paroi matérialisée par les ailes des croisillons interposés entre les tubes, la fabrication de paniers comportant des alvéoles de section droite quelconque est possible sans difficulté particulière. De plus, le caractère composite des parois des alvéoles permet de remplir aisément toutes les fonctions énoncées précédemment. En d'autres termes, les paniers selon l'invention permettent, de façon simple, d'utiliser au mieux les propriétés de différents matériaux pour optimiser les performances et la capacité de rangement des paniers, tout en autorisant une grande diversité de formes, contrairement aux paniers de l'art antérieur.

Dans les modes de réalisation préférés de l'invention, les croisillons sont en contact les uns avec les autres par des bords d'extrémité de leurs ailes opposés auxdites arêtes communes. On garantit ainsi le contact thermique entre les ailes des croisillons et la continuité de la deuxième paroi.

Selon le cas, les bords d'extrémité des ailes des croisillons peuvent alors présenter des méplats sensiblement parallèles aux plans desdites ailes, par lesquels les croisillons sont en contact les uns avec les autres, ou des formes complémentaires, de type tenon-mortaise, par lesquels les croisillons s'emboîtent l'un dans l'autre.

Selon un premier mode de réalisation de l'invention, les tubes ont une section droite carrée ou rectangulaire et les croisillons comprennent quatre ailes orientées selon deux directions orthogonales entre elles.

Selon un deuxième mode de réalisation de l'invention, les tubes ont une section droite hexagonale et les croisillons comprennent trois ailes orientées selon trois directions formant entre elles des angles de 120°.

Selon un troisième mode de réalisation de l'invention, les tubes ont une section droite circulaire et les croisillons comprennent quatre ailes orientées selon deux directions orthogonales entre elles.
Dans tous les cas, chaque croisillon peut être soit formé d'une seule pièce dont la longueur est sensiblement égale à la longueur des tubes, soit formé de plusieurs tronçons de croisillons disposés bout à bout et dont la longueur cumulée est alors sensiblement égale à la longueur des tubes.

Pour contribuer à l'efficacité du transfert thermique, les croisillons comprennent de préférence au moins une couche d'un matériau choisi dans le groupe comprenant l'aluminium, le cuivre, et leurs alliages.

Lorsque les matières radioactives sont des matières fissiles, au moins un matériau constituant les tubes et/ou les croisillons incorpore un élément absorbeur de neutrons. Cet élément absorbeur de neutrons peut notamment être du bore, de l'hafnium ou du cadmium. En particulier, il s'agit avantageusement de bore enrichi en bore 10, à 80% au moins en poids.

Dans une forme de réalisation, les ailes des croisillons comprennent au moins deux couches de matériaux distincts, plaquées les unes sur les autres.

Pour permettre aux tubes de remplir l'une de leurs fonctions essentielles qui est d'assurer la résistance mécanique du panier en toutes circonstances, lesdits tubes sont réalisés avantageusement en un matériau choisi dans le groupe comprenant les aciers inoxydables, les aciers au carbone, les aluminiums et leurs alliages possédant de bonnes propriétés mécaniques, et le titane.

Selon un premier mode de réalisation des moyens d'assemblage, ceux-ci comprennent au moins deux structures métalliques de cerclage entourant le faisceau de tubes à des niveaux différents.

Avantageusement, les structures de cerclage sont alors réalisées dans un matériau ayant un coefficient de dilatation thermique au plus égal à celui du matériau dans lequel sont réalisés les tubes.

Selon un deuxième mode de réalisation des moyens d'assemblage, ceux-ci comprennent aux moins deux plaques situées à des niveaux différents du panier et des organes de liaison solidarisant lesdites plaques entre elles, chaque plaque étant percée d'un réseau de trous ayant la forme de la section droite des tubes et dans lesquels sont reçus lesdits tubes.

Dans ce cas, l'une au moins des plaques est située de préférence au niveau d'une extrémité du panier.

Par ailleurs, les organes de liaison sont avantageusement fixés sur les plaques par des vis.

Dans le deuxième mode de réalisation des moyens d'assemblage, chaque organe de liaison comprend de préférence une surface intérieure complémentaire de l'enveloppe extérieure du faisceau de tubes et des croisillons associés, et une surface extérieure régulière formant une surface extérieure du panier et donnant à celle-ci un caractère régulier.

Dans tous les cas, le panier peut également comprendre un fond rigide.

### Brève description des dessins

On décrira à présent, à titre d'exemples non limitatifs, différents modes de réalisation de l'invention, en se référant aux dessins annexés, dans lesquels :
- la figure 1 est une vue en perspective qui représente schématiquement un panier de rangement pour matières radioactives selon un premier mode de réalisation de l'invention ;
- la figure 2 est une vue en coupe à plus grande échelle du panier de la figure 1, selon un plan horizontal ;
- les figures 3A et 3B sont des vues en coupe comparables à la figure 2, illustrant encore à plus grande échelle, deux réalisations possibles des bords d'extrémité des ailes des croisillons ;
- la figure 4 est une vue comparable à la figure 1, illustrant un deuxième mode de réalisation de l'invention ;
- la figure 5 est une vue en coupe à plus grande échelle du panier de la figure 4, selon un plan horizontal ;
- la figure 6 est une vue en perspective éclatée, illustrant un troisième mode de réalisation de l'invention ; et
- la figure 7 est une vue en coupe à plus grande échelle du panier de la figure 6, selon un plan horizontal.

### Description détaillée de modes de réalisation préférés de l'invention

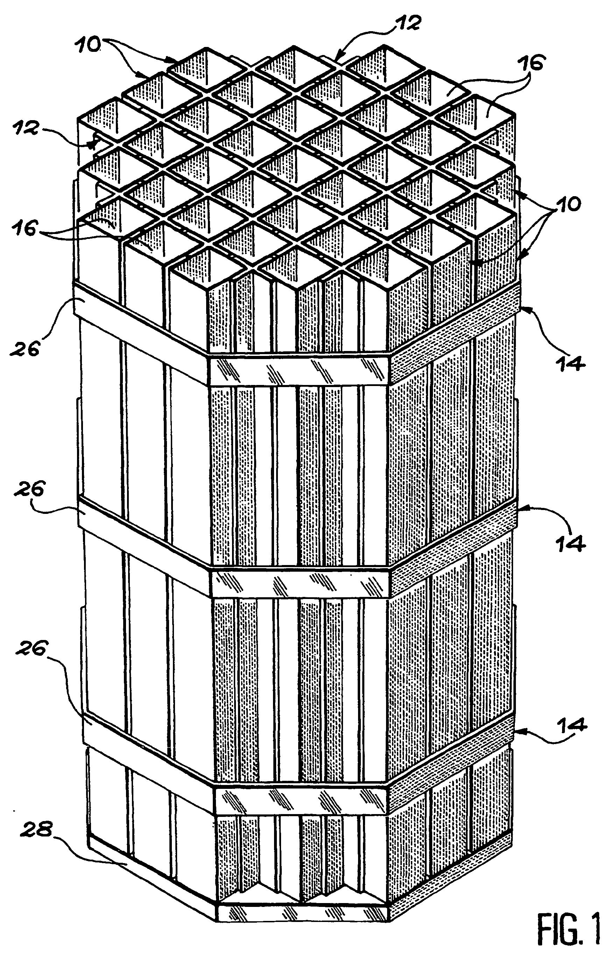

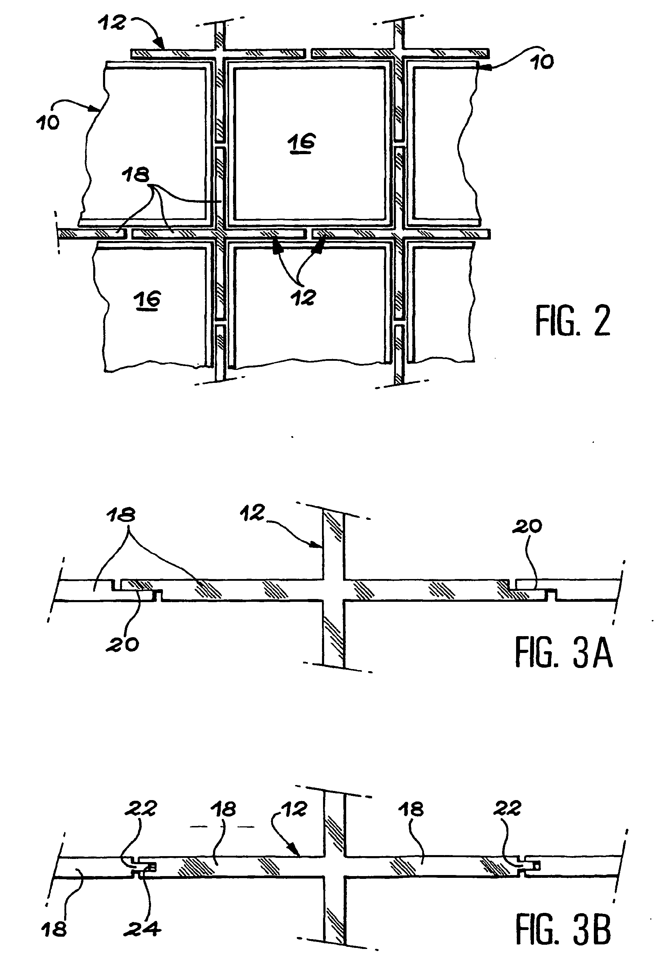

Un panier de rangement pour matières radioactives selon un premier mode de réalisation préféré de l'invention est illustré sur la figure 1. Ce panier de rangement comprend une pluralité de tubes 10, une pluralité de croisillons 12 (figure 2) placés entre les tubes 10, et des moyens d'assemblage 14 assurant la cohésion et la compacité de l'ensemble.

Comme on l'a déjà précisé, les matières radioactives susceptibles d'être transportées dans le panier peuvent être de nature quelconque. Il peut notamment s'agir d'éléments combustibles de réacteurs nucléaires de section carrée ou hexagonale.

Les tubes 10 sont des tubes métalliques rectilignes, tous identiques. En particulier, tous les tubes 10 ont la même section et la même longueur, et ils sont réalisés dans les mêmes matériaux. Les moyens d'assemblage 14 regroupent les tubes 10 en faisceau, parallèlement les uns aux autres, selon un réseau régulier.

Plus précisément, le faisceau de tubes 10 est prévu pour être orienté verticalement. On forme ainsi une pluralité d'alvéoles 16 adjacents, dont chacun est apte à recevoir des matières radioactives conditionnées telles que, par exemple, des éléments combustibles de réacteurs nucléaires, afin d'en assurer le transport et/ou le stockage.

Chacun des tubes 10 matérialise une première paroi de l'alvéole correspondant. Cette première paroi entoure l'alvéole, pratiquement sans discontinuité, sur toute sa hauteur et sur toute sa périphérie.

Les croisillons 12 sont des pièces métalliques formées d'un certain nombre de plaques planes 18, appelées "ailes", généralement dépourvues d'ouvertures. Toutes les ailes 18 d'un même croisillon 12 sont reliées entre elles par une arête commune rectiligne et réparties selon des intervalles angulaires réguliers autour de ladite arête.

Dans le mode de réalisation illustré sur la figure 1, la longueur des croisillons 12 est sensiblement égale à la longueur des tubes 10.

Dans une variante de réalisation (non représentée), chaque croisillon 12 est formé de plusieurs tronçons de croisillons disposés bout à bout. La longueur cumulée de ces tronçons est alors sensiblement égale à la longueur des tubes 10.

Chacun des croisillons 12 est associé à un groupe de tubes 10 adjacents, dont le nombre et l'agencement dépendent de la section droite des tubes et de la forme du réseau formé par le faisceau de tubes. L'arête commune du croisillon est placée au centre du groupe de tubes 10 et orientée parallèlement aux axes des tubes. Le nombre des ailes 18 du croisillon 12 est égal au nombre des tubes 10 dudit groupe. Ainsi, une aile 18 du croisillon 12 est placée entre chaque paire de tubes adjacents du groupe de tubes 10.

Les ailes 18 de chacun des croisillons 12 s'étendent entre les tubes 10 de telle sorte que le bord d'extrémité de chaque aile 18 opposé à l'arête commune soit parallèle à ladite arête et en contact avec le bord d'extrémité de l'aile du croisillon 12 voisin placé entre la même paire de tubes 10. Les croisillons 12 matérialisent ainsi une deuxième paroi sensiblement continue autour de chacun des alvéoles 16.

Par ailleurs, l'assemblage assuré par les moyens d'assemblage 14 est tel que chacune des ailes 18 des croisillons 12 est en contact avec chacun des tubes 10 placés de part et d'autre de cette aile, pratiquement sur toute la hauteur du panier. La deuxième paroi matérialisée par les croisillons 12 autour de chaque alvéole 16 est donc en contact au moins partiel avec la première paroi matérialisée par les tubes 10.

Dans le mode de réalisation illustré plus précisément sur les figures 1 et 2, chacun des tubes 10 présente une section droite carrée. Le réseau régulier formé par le faisceau de tubes 10 est alors un réseau à pas carré, de sorte que chaque groupe de tubes est formé de quatre tubes 10 adjacents. Conformément à la règle énoncée précédemment, chaque croisillon 12 comprend alors quatre ailes 18, orientées selon deux directions orthogonales entre elles. Cet agencement, qui apparaît clairement sur les figures 1 et 2, assure un contact surfacique intégral entre les ailes 18 des croisillons 12 et les faces adjacentes des tubes 10.

Afin d'assurer un contact sûr entre les bords d'extrémité des ailes 18 opposés aux arêtes communes des croisillons 12, comme on l'a décrit plus avant, différents agencements sont possibles.

Selon un premier agencement, illustré sur la figure 3A, les bords d'extrémité des ailes 18 présentent des méplats 20, orientés sensiblement parallèlement aux plans des ailes. Plus précisément, les méplats 20 sont situés dans le plan médian des ailes et orientés de façon à se faire face lorsque les deux croisillons 12 voisins sont en place. Les méplats 20 sont alors en contact les uns avec les autres sur la majeure partie de leurs surfaces. Cet agencement permet d'accroître les surfaces de contact entre les ailes 18 des croisillons 12 et, par conséquent, de faciliter le transfert du flux de chaleur d'un croisillon à l'autre.

Selon un deuxième agencement, illustré sur la figure 3B, les bords d'extrémité des ailes des croisillons 12 opposés à l'arête centrale présentent des formes complémentaires, d'un croisillon à l'autre, de telle sorte qu'ils s'emboîtent l'un dans l'autre. Ces formes complémentaires sont, par exemple, une forme en tenon 22 et une forme en mortaise 24. Cet agencement procure les mêmes avantages que le précédent, auxquels s'ajoute un effet d'emboîtement qui améliore encore les contacts et la propagation du flux de chaleur.

Dans le panier selon l'invention, les tubes 10 formant les premières parois des alvéoles ont notamment pour fonction d'assurer la résistance mécanique du panier, aussi bien dans les conditions normales d'utilisation qu'en conditions accidentelles (par exemple, chute du panier). Le maintien de la géométrie du panier est ainsi assuré en toutes circonstances, ce qui contribue à conserver le contrôle de la criticité nucléaire.

Pour leur permettre de remplir efficacement cette fonction, les tubes 10 sont réalisés avantageusement en un matériau résistant, choisi de préférence dans le groupe des aciers inoxydables, des aciers au carbone, des aluminiums et des alliages d'aluminium présentant de bonnes propriétés mécaniques, et du titane. Cette liste de matériaux n'est nullement limitative.

Les tubes 10 peuvent être obtenus selon une technique de fabrication quelconque, par exemple en roulant ou en pliant une tôle à la forme voulue, puis en la refermant par une soudure longitudinale. Dans le cas de tubes en aluminium, on utilise avantageusement les techniques usuelles d'extrusion, qui permettent d'obtenir, par filage, des tubes de toutes formes et dimensions, ne comportant aucune soudure.

Dans le panier selon l'invention, la fonction d'évacuation de la chaleur produite par les matières radioactives est principalement assurée par les croisillons 12. Cette fonction est particulièrement importante lorsque les matières radioactives sont des éléments combustibles préalablement irradiés dans des réacteurs nucléaires, car ces éléments émettent une puissance thermique importante.

Dans l'agencement selon l'invention, le flux de chaleur produit par les matières radioactives est d'abord transmis au métal des croisillons 12 par le métal des tubes 10 constituant les premières parois. Cette transmission est facilitée par le fait que les ailes 18 des croisillons 12, qui constituent les secondes parois des alvéoles, sont maintenues en proximité étroite avec les parois des tubes 10 constituant les premières parois des alvéoles, de façon à faciliter le transfert thermique. L'efficacité de ce transfert thermique est avantageusement accrue en choisissant le matériau des croisillons parmi les métaux bons conducteurs de la chaleur, tels que le cuivre et ses alliages ou l'aluminium et ses alliages.

Le flux thermique transite ensuite dans la matière des croisillons 12 qui sont en contact les uns avec les autres par leurs bords d'extrémité, de l'intérieur vers l'extérieur du panier. En particulier, du fait du contact établi entre les bords d'extrémité des ailes des croisillons, le flux de chaleur transite vers l'extérieur du panier pratiquement sans interruption, et donc sans rencontrer de résistances thermiques importantes susceptibles de provoquer une montée excessive de la température interne du panier.

Le flux de chaleur est ensuite dissipé dans l'atmosphère ou dans la structure d'un conteneur de transport ou de stockage, dans lequel est logé le panier.

Lorsque le panier est rempli de matières radioactives fissiles susceptibles de provoquer une réaction en chaîne, ses composants doivent également remplir une troisième fonction essentielle qui est le contrôle de la criticité nucléaire.

Ce contrôle est assuré tout d'abord par la résistance mécanique du panier, obtenue grâce à la résistance des tubes 10 formant les premières parois des alvéoles, comme décrit ci-avant.

Le contrôle de la criticité nucléaire est aussi assuré par l'ajout éventuel de poisons neutrophages tels que du bore ou du cadmium dans les structures du panier. Ces poisons peuvent être incorporés, sous forme dispersée, soit dans le métal des tubes 10, soit dans le métal des croisillons 12, soit dans ces deux composants à la fois. Alternativement, le poison peut aussi être ajouté sous la forme d'une couche d'un matériau, tel qu'un matériau fritté à base de carbure de bore, plaquée sur les ailes 18 des croisillons 12.

Lorsque le poison neutrophage est du bore, celui- ci est avantageusement enrichi en bore 10, qui est l'isotope du bore efficace comme absorbeur de neutrons. Cette caractéristique permet de ne pas trop altérer la tenue mécanique et métallurgique des matériaux utilisés, en réduisant leur teneur totale en bore.

Dans un exemple de réalisation, les ailes des croisillons 12 sont des cloisons composites, comprenant un placage d'un métal très bon conducteur de la chaleur, tel que du cuivre ou un alliage de cuivre, et d'un matériau à haute teneur en bore tel qu'un matériau fritté à base de carbure de bore B₄C.

Comme l'illustre l'exemple qui précède, un même composant du panier peut remplir simultanément plusieurs des fonctions précitées, afin d'optimiser les performances.

Dans le mode de réalisation de l'invention illustré sur la figure 1, les moyens d'assemblage 14 sont matérialisés par des structures de cerclage entourant le faisceau de tubes 10 et les croisillons 12 à différents niveaux. Le nombre des structures de cerclage 14 est au moins égal à deux. Sur la figure 1, ce nombre est égal à trois. Chaque structure de cerclage comprend une bande de cerclage 26 entourant le faisceau de tubes et un système de tension (non représenté). Avantageusement, Les bandes de cerclage 26 sont réalisées dans un métal différent de celui des tubes 10. Ce métal est choisi de façon à avoir un coefficient de dilatation inférieur et au plus égal à celui du métal des tubes, afin que la cohésion et le placage des tubes et des croisillons restent inchangés ou soient améliorés lorsque la température augmente. L'efficacité des transferts thermiques est ainsi préservée. La force de serrage des structures de cerclage est réglée initialement à la valeur désirée au moyen des systèmes de tension (non représentés).

Comme on l'a également représenté sur la figure 1, le panier selon l'invention peut comporter, en plus des composants décrits jusqu'à présent, une plaque de fond ou plaque inférieure rigide 28, généralement métallique. Les tubes 10 et les croisillons 12 reliés par les moyens d'assemblage 14 reposent sur la plaque inférieure 28. Celle-ci est particulièrement utile pour retenir les matières radioactives, par exemple lorsque le panier doit être manutentionné séparément.

Le panier selon l'invention peut également être muni d'une plaque de tête ou plaque supérieure (non représentée). Celle-ci peut alors être équipée de dispositifs servant à la manutention du panier.

Dans une variante de réalisation (non représentée), les tubes 10 de section droite carrée sont remplacés par des tubes de section rectangulaire. Les croisillons 12 comprennent alors deux petites ailes coplanaires, de largeur égale à la moitié du petit côté du rectangle, et deux grandes ailes orthogonales aux précédentes, de largeur égale à la moitié du grand côté du rectangle.

Dans une autre variante de réalisation (non représentée), les tubes 10 présentent une section droite circulaire. Les ailes des croisillons 12 sont alors tangentes aux tubes à leurs extrémités. C'est donc à cet endroit que le flux thermique est transmis des tubes aux croisillons.

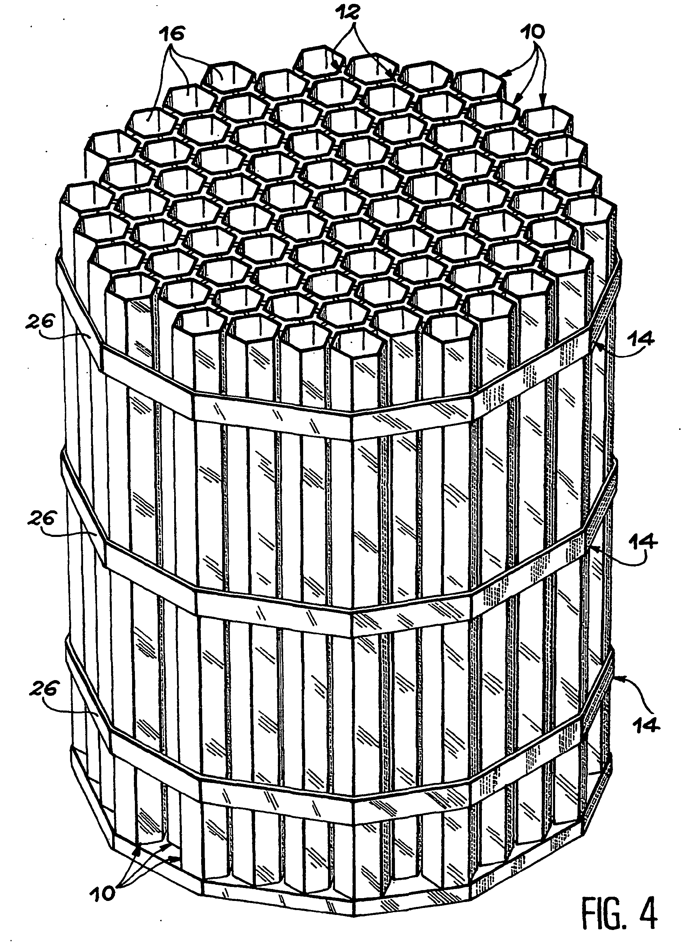

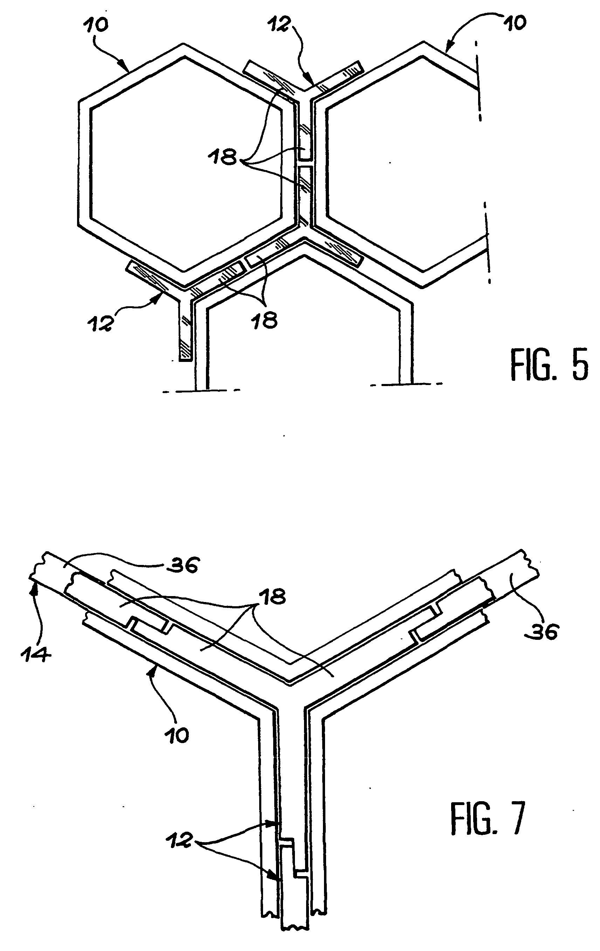

Le deuxième mode de réalisation de l'invention illustré sur les figures 4 et 5 diffère essentiellement du premier par la forme des tubes 10.

Ainsi, au lieu de présenter une section droite carrée, les tubes 10 ont, dans ce cas, une section droite hexagonale. Le faisceau de tubes 10 forme alors un réseau triangulaire. L'application des principes exposés précédemment conduit à doter chaque croisillon 12 de trois ailes 18, disposées à 120° les unes des autres. Toutes les autres caractéristiques et propriétés décrites à propos du premier mode de réalisation de l'invention et de ses variantes sont, par ailleurs, applicables dans ce cas.

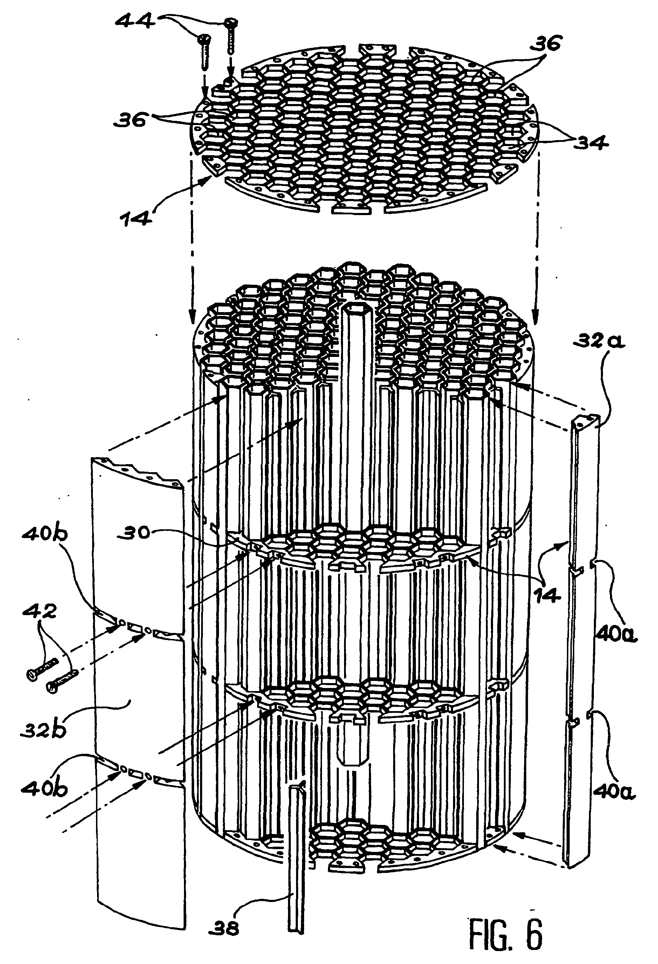

Sur les figures 6 et 7, on a représenté un troisième mode de réalisation de l'invention.

Comme dans le deuxième mode de réalisation des figures 4 et 5, les tubes 10 ont une section droite hexagonale. Toutefois, au lieu d'être constitués de structures de cerclage, les moyens d'assemblage 14 comprennent, dans ce cas, des plaques métalliques perforées 30, solidarisées entre elles par des organes de liaison 32a, 32b, de façon à constituer une armature rigide de maintien des tubes 10 et des croisillons 12.

De façon plus précise, les plaques 30 sont au moins au nombre de deux et elles sont régulièrement réparties sur la hauteur du panier, perpendiculairement à l'axe des tubes 10. Les plaques 30 sont minces (de quelques millimètres à quelques centimètres) et comportent un réseau de trous 34 dont la forme et les dimensions correspondent à celles des tubes 10. Ainsi, dans l'exemple représenté où les tubes 10 sont hexagonaux, les trous 34 sont également hexagonaux et leurs dimensions sont légèrement supérieures à celles des tubes. Un tube 10 est donc reçu dans chacun des trous 34 de chacune des plaques 30, avec un jeu réduit. Etant donné que les plaques 30 sont solidarisées entre elles par les organes de liaison 32a et 32b, on assure ainsi le maintien des tubes 10 entre les appuis constitués par les parois des plaques.

Comme l'illustre en particulier la figure 7, l'épaisseur des parois 36 formées entre les trous 34 adjacents d'une même plaque 30 est ajustée de façon à être légèrement supérieure à l'épaisseur des ailes 18 des croisillons 12. Cet agencement permet de disposer d'un espace suffisant, entre les tubes 10, pour insérer les croisillons 12, tout en réduisant le jeu de montage à une valeur suffisamment faible pour conserver une proximité étroite entre les ailes des croisillons et les parois des tubes.

Chacun des croisillons 12 est alors formé de plusieurs tronçons de croisillons 38, chaque tronçon ayant une longueur sensiblement égale à la distance séparant deux plaques 30 consécutives ou à la distance séparant chaque extrémité du panier de la plaque la plus proche. Cet agencement permet de réaliser, autour de chaque alvéole, une deuxième paroi sensiblement continue.

Comme l'illustre schématiquement la figure 6, les plaques 30 comprennent avantageusement des plaques de tête et de fond, situées respectivement aux extrémités haute et basse du panier. Dans ce cas, la plaque de tête est de préférence équipée de dispositifs de manutention du panier, tels que des boulons à oeil. La plaque perforée de fond peut aussi être remplacée ou doublée par une plaque massive, comme on l'a décrit en référence à la figure 1.

Comme le montre notamment la figure 6, les organes de liaison 32a et 32b sont placés à l'extérieur du faisceau de tubes 10 et ils s'étendent parallèlement à ces derniers sur toute la hauteur du panier.

Au niveau des plaques 30 autres que les plaques de tête et de fond, chacun des organes de liaison 32a et 32b comporte une encoche 40a et 40b, respectivement. Cette encoche 40a, 40b s'emboîte sur une partie découpée, de forme complémentaire, du bord périphérique de la plaque 30 correspondante. Un ou plusieurs organes de fixation tels que des vis 42, traversant les organes de liaison 32a et 32b, assurent la fixation de ces organes sur chacune des plaques 30.

Lorsque des plaques de tête et de fond sont prévues, elles sont fixées aux extrémités des organes de liaison 32a et 32b par des organes de fixation tels que des vis 44.

L'agencement qui vient d'être décrit permet de donner à l'armature formée par les plaques 30 et les organes de liaison 32a et 32b une structure rigide.

Dans le mode de réalisation illustré sur la figure 6, les organes de liaison 32a et 32b sont de deux types différents, selon l'emplacement où ils se situent à la périphérie du panier. Cela est du au fait que l'assemblage de tubes 10 de section droite hexagonale à l'intérieur d'une enveloppe de section droite circulaire forme alternativement, à la périphérie du panier, des premières parties en creux de section droite semi-hexagonale et des deuxièmes parties en creux de section droite en dents de scie.

Les organes de liaison 32a ont une face intérieure complémentaire des premières parties en creux et les organes de liaison 32b ont une face intérieure complémentaire des deuxièmes parties en creux. Les faces extérieures des organes de liaison 32a et 32b ont la forme de secteurs cylindriques et présentent toutes le même rayon de courbure, qui correspond à celui de l'enveloppe extérieure cylindrique du panier. Par conséquent, lorsque tous les organes de liaison 32a et 32b sont montés autour du faisceau de tubes 10, leurs faces extérieures matérialisent l'enveloppe extérieure cylindrique du panier.

L'agencement qui vient d'être décrit permet de maintenir un jeu uniforme entre le panier et le conteneur, lorsque le panier est placé à l'intérieur d'un conteneur. Cette caractéristique favorise la transmission du flux de chaleur entre l'extérieur du panier et les structures du conteneur.

Bien entendu, la forme cylindrique du contour extérieur du panier n'est donnée qu'à titre d'exemple. Une section droite rectangulaire, carrée ou autre peut également être obtenue en donnant aux organes de liaison des formes appropriées.

Les matériaux utilisés pour la fabrication des plaques 30 et des organes de liaison 32a et 32b sont, de préférence, des métaux présentant une bonne résistance mécanique, tels que des métaux choisis dans le groupe des aciers inoxydables, des aciers au carbone et des alliages d'aluminium présentant de bonnes propriétés mécaniques.

On comprendra que le panier conforme au troisième mode de réalisation qui vient d'être décrit présente, par ailleurs, des caractéristiques et des propriétés analogues à celles des autres modes de réalisation et de leurs variantes.

Les modes de réalisation et variantes décrits mettent bien en évidence les nombreux avantages de l'invention. En particulier, il apparaît clairement que l'invention se prête aussi bien à la réalisation de paniers à alvéoles hexagonaux qu'à celle de paniers à alvéoles de formes plus courantes telles que carrées ou rectangulaires. De plus, l'assemblage compact des tubes et des croisillons assuré par les différents moyens d'assemblage décrits facilite les transferts thermiques. L'utilisation d'organes de fixation tels que des vis ou des soudures est réduite au minimum. Les coûts de fabrication sont donc optimisés.

## Revendications

1. Panier de rangement pour matières radioactives, comprenant une pluralité de tubes métalliques rectilignes (10) agencés en faisceau et des moyens d'assemblage (14) regroupant les tubes (10) parallèlement les uns aux autres, selon un réseau régulier, de façon à former une pluralité d'alvéoles (16) adjacents, aptes à recevoir lesdites matières radioactives, chacun des tubes (10) matérialisant une première paroi sensiblement continue d'un alvéole (16) correspondant, ledit panier étant **caractérisé en ce qu'**il comprend de plus une pluralité de croisillons métalliques (12) incluant chacun au moins trois ailes (18) reliées entre elles par une arête commune, les croisillons (12) étant placés entre les tubes (10) de façon à définir, autour de la première paroi de chaque alvéole (16) et en contact au moins partiel avec celle-ci, une deuxième paroi sensiblement continue.

2. Panier de rangement selon la revendication 1, dans lequel les croisillons (12) sont en contact les uns avec les autres par des bords d'extrémité de leurs ailes (18) opposés auxdites arêtes communes.

3. Panier de rangement selon la revendication 2, dans lequel les bords d'extrémité des ailes (18) des croisillons (12) présentent des méplats (20) sensiblement parallèles aux plans desdites ailes (18), les croisillons (12) étant en contact les uns avec les autres par lesdits méplats (20).

4. Panier de rangement selon la revendication 2, dans lequel les bords d'extrémité des ailes (18) des croisillons (12) en contact les uns avec les autres présentent des formes complémentaires, de type tenon (22)-mortaise (24), de sorte qu'ils s'emboîtent l'un dans l'autre.

5. Panier de rangement selon l'une quelconque des revendications 1 à 4, dans lequel les tubes (10) ont une section droite carrée ou rectangulaire et les croisillons (12) comprennent quatre ailes (18) orientées selon deux directions orthogonales entre elles.

6. Panier de rangement selon l'une quelconque des revendications 1 à 4, dans lequel les tubes (10) ont une section droite hexagonale et les croisillons (12) comprennent trois ailes (18) orientées selon trois directions formant entre elles des angles de 120°.

7. Panier de rangement selon l'une quelconque des revendications 1 à 4, dans lequel les tubes (10) ont une section droite circulaire et les croisillons (12) comprennent quatre ailes (18) orientées selon deux directions orthogonales entre elles.

8. Panier de rangement selon l'une quelconque des revendications 1 à 7, dans lequel les croisillons (12) ont une longueur sensiblement égale à celle des tubes (10).

9. Panier de rangement selon l'une quelconque des revendications 1 à 7, dans lequel les croisillons (12) sont formés de tronçons de croisillons (38) disposés bout à bout, de telle sorte que la longueur cumulée desdits tronçons (38) soit sensiblement égale à la longueur des tubes (10).

10. Panier de rangement selon l'une quelconque des revendications 1 à 9, dans lequel les ailes (18) des croisillons (12) comprennent au moins deux couches de matériaux distincts, plaquées les unes sur les autres.

11. Panier de rangement selon l'une quelconque des revendications 1 à 10, dans lequel les croisillons (12) comprennent au moins une couche d'un matériau choisi dans le groupe comprenant l'aluminium, le cuivre, et leurs alliages.

12. Panier de rangement selon l'une quelconque des revendications 1 à 11, dans lequel au moins l'une de la pluralité de tubes (10) et de la pluralité de croisillons (12) comprend un matériau intégrant un élément absorbeur de neutrons.

13. Panier de rangement selon la revendication 12, dans lequel l'élément absorbeur de neutrons est choisi dans le groupe comprenant le bore, l'hafnium et le cadmium.

14. Panier de rangement selon la revendication 12, dans lequel l'élément absorbeur de neutrons est du bore enrichi en bore 10, à 80% au moins en poids.

15. Panier de rangement selon l'une quelconque des revendications 1 à 14, dans lequel les tubes (10) et les moyens d'assemblage (14) sont réalisés dans des matériaux choisis dans le groupe comprenant les aciers inoxydables, les aciers au carbone, les aluminiums et leurs alliages, et le titane.

16. Panier de rangement selon l'une quelconque des revendications 1 à 15, dans lequel les moyens d'assemblage (14) comprennent au moins deux structures métalliques de cerclage (26) entourant le faisceau de tubes (10) à des niveaux différents.

17. Panier de rangement selon la revendication 16, dans lequel les structures de cerclage (26) sont réalisées dans un matériau ayant un coefficient de dilatation thermique au plus égal à celui du matériau dans lequel sont réalisés les tubes (10) .

18. Panier de rangement selon l'une quelconque des revendications 1 à 15, dans lequel les moyens d'assemblage (14) comprennent au moins deux plaques (30) situées à des niveaux différents du panier et des organes de liaison (32a, 32b)solidarisant lesdites plaques (30) entre elles, chaque plaque étant percée d'un réseau de trous (34) ayant la forme de la section droite des tubes (10) et dans lesquels sont reçus lesdits tubes.

19. Panier de rangement selon la revendication 18, dans lequel l'une au moins des plaques (30) est située au niveau d'une extrémité du panier.

20. Panier de rangement selon l'une quelconque des revendications 18 et 19, dans lequel les organes de liaison (32a, 32b) sont fixés sur les plaques (30) par des vis (42, 44).

21. Panier de rangement selon l'une quelconque des revendications 18 à 20, dans lequel chaque organe de liaison (32a, 32b) comprend une surface intérieure complémentaire de l'enveloppe extérieure du faisceau de tubes (10) et des croisillons (12) associés, et une surface extérieure régulière formant une surface extérieure du panier et donnant à celle-ci un caractère régulier.

22. Panier de rangement selon l'une quelconque des revendications 1 à 21, dans lequel ledit panier comprend de plus un fond rigide (28).

## Patentansprüche

1. Aufnahmebehälter für radioaktive Stoffe, mit mehreren geradlinigen Metallrohren (10), die im Bündel angeordnet sind, sowie Anordnungs- bzw. Montagemittel (14), welche die Rohre (10) parallel zueinander in einem regelmäßigen Netz gruppieren, so dass sie mehrere aneinandergrenzende Zellen (16) bilden, welche die radioaktiven Stoffe aufnehmen können, wobei jedes der Rohre (10) eine erste, zu einer entsprechenden Zelle (16) im wesentlichen kontinuierliche Wand bildet, wobei der Behälter **dadurch gekennzeichnet ist, dass** er außerdem mehrere Metall-Kreuzstreben (12) umfasst, die jeweils mindestens drei Flügel (18) enthalten, welche untereinander durch einen gemeinsamen Grat verbunden sind, wobei die Kreuzstreben (12) zwischen den Rohren (10) derart angeordnet sind, dass sie um die erste Wand jeder Zelle (16) herum und zumindest in teilweisem Kontakt mit dieser eine zweite, im wesentlichen kontinuierliche Wand festlegen.

2. Aufnahmebehälter nach Anspruch 1, wobei die Kreuzstreben (12) über Außenränder ihrer Flügel (18), die den gemeinsamen Stegen bzw. Graten gegenüberliegen, in Kontakt miteinander stehen.

3. Aufnahmebehälter nach Anspruch 2, wobei die Außenränder der Flügel (18) der Kreuzstreben (12) Abflachungen (20) aufweisen, die im wesentlichen parallel zu Ebenen der Flügel (18) sind, wobei die Kreuzstreben (12) über die Abflachungen (20) miteinander in Kontakt stehen.

4. Aufnahmebehälter nach Anspruch 2, wobei die Außenränder der Flügel (18) der miteinander in Kontakt stehenden Kreuzstreben (12) komplementäre Formen von der Art Zapfen (22) - Zapfenloch (24) aufweisen, so dass sie ineinander greifen.

5. Aufnahmebehälter nach einem der Ansprüche 1 bis 4, wobei die Rohre (10) einen geraden quadratischen oder rechteckigen Querschnitt aufweisen und die Kreuzstreben (12) vier Flügel (18) umfassen, die in zwei zueinander senkrechten Richtungen ausgerichtet sind.

6. Aufnahmebehälter nach einem der Ansprüche 1 bis 4, wobei die Rohre (10) einen geraden sechseckigen Querschnitt aufweisen und die Kreuzstreben (12) drei Flügel (18) umfassen, die in drei Richtungen ausgerichtet sind, welche untereinander Winkel von 120° bilden.

7. Aufnahmebehälter nach einem der Ansprüche 1 bis 4, wobei die Rohre (10) einen geraden kreisförmigen Querschnitt aufweisen und die Kreuzstreben (12) vier Flügel (18) umfassen, die in zwei zueinander senkrechten Richtungen ausgerichtet sind.

8. Aufnahmebehälter nach einem der Ansprüche 1 bis 7, wobei die Kreuzstreben (12) eine Länge aufweisen, die im wesentlichen gleich derjenigen der Rohre (10) ist.

9. Aufnahmebehälter nach einem der Ansprüche 1 bis 7, wobei die Kreuzstreben (12) aus im Stoß zueinander angeordneten Kreuzstreben-Teilstücken (38) derart ausgebildet sind, dass die kumulierte Länge der Teilstücke (38) im wesentlichen gleich der Länge der Rohre (10) ist.

10. Aufnahmebehälter nach einem der Ansprüche 1 bis 9, wobei die Flügel (18) der Kreuzstreben (12) mindestens zwei Schichten aus unterschiedlichen Materialien umfassen, die aufeinandergeschichtet sind.

11. Aufnahmebehälter nach einem der Ansprüche 1 bis 10, wobei die Kreuzstreben (12) mindestens eine Materialschicht umfassen, die aus der Aluminium, Kupfer und deren Legierungen umfassenden Gruppe ausgewählt ist.

12. Aufnahmebehälter nach einem der Ansprüche 1 bis 11, wobei mindestens eine(s) der mehreren Rohre (10) und der mehreren Kreuzstreben (12) ein Material aufweist, in dem ein Neutronenabsorptionselement enthalten ist.

13. Aufnahmebehälter nach Anspruch 12, wobei das Neutronenabsorptionselement aus der Bor, Hafnium und Cadmium umfassenden Gruppe ausgewählt ist.

14. Aufnahmebehälter nach Anspruch 12, wobei das Neutronenabsorptionselement aus Bor besteht, das mit Bor-10 zu mindestens 80 Gewichtsprozent angereichert ist.

15. Aufnahmebehälter nach einem der Ansprüche 1 bis 14, wobei die Rohre (10) und Anordnungs- bzw. Montagemittel (14) aus Materialien hergestellt sind, die aus der rostfreie Stähle, Kohlenstoffstähle, Aluminium und dessen Legierungen sowie Titan umfassenden Gruppe ausgewählt sind.

16. Aufnahmebehälter nach einem der Ansprüche 1 bis 15, wobei die Montage- bzw. Anordnungsmittel (14) mindestens zwei metallische Umfassungsstrukturen (26) umfassen, welche das Rohrbündel (10) auf verschiedenen Höhen umgeben.

17. Aufnahmebehälter nach Anspruch 16, wobei die Umfassungsstrukturen (26) aus einem Material hergestellt sind, das einen Wärmedehnungskoeffizienten aufweist, der zumindest gleich demjenigen des Materials ist, aus dem die Rohre (10) hergestellt sind.

18. Aufnahmebehälter nach einem der Ansprüche 1 bis 15, wobei die Montage- bzw. Anordnungsmittel (14) mindestens zwei Platten (30) umfassen, die sich auf unterschiedlichen Höhen des Behälters befinden, und Verbindungselemente (32a,32b), die Platten (30) untereinander verbinden, wobei jede Platte von einem Netz aus Löchern (34) durchsetzt ist, welche die Form des geraden Querschnitts der Rohre (10) aufweisen und in die die Rohre aufgenommen sind.

19. Aufnahmebehälter nach Anspruch 18, wobei mindestens eine der Platten (30) sich auf Höhe eines Endes des Behälters befindet.

20. Aufnahmebehälter nach einem der Ansprüche 18 oder 19, wobei die Verbindungselemente (32a,32b) an den Platten (30) durch Schrauben (42,44) befestigt sind.

21. Aufnahmebehälter nach einem der Ansprüche 18 bis 20, wobei jedes Verbindungselement (32a,32b) eine zu der Außenumhüllung des Rohrbündels (10) komplementäre Innenfläche sowie zugeordnete Kreuzstreben (12) umfasst, und eine regelmäßige Außenfläche, die eine Außenfläche des Behälters bildet und diesem eine regelmäßige Eigenschaft verleiht, umfasst.

22. Aufnahmebehälter nach einem der Ansprüche 1 bis 21, wobei der Behälter außerdem einen starren Boden (28) aufweist.

## Claims

1. Storage basket for radioactive materials comprising several prismatic metallic tubes (10) laid out as a bundle and assembly means (14) grouping the tubes (10) parallel to each other along a regular network, in order to form several adjacent compartments (16) in which the said radioactive materials can be placed, each of the tubes (10) materializing an approximately continuous wall of a corresponding compartment (16), the said basket being **characterized in that** it also comprises several metallic cross pieces (12) each including at least three flanges (18) connected to each other through a common edge, the cross pieces (12) being placed between the tubes (10) in order to define a second approximately continuous wall around the first wall of each compartment (16) and in at least partial contact with it.

2. Storage basket according to claim 1, in which the cross pieces (12) are in contact with each other through the outside edges of their flanges (18) opposite the said common edges.

3. Storage basket according to claim 2, in which the outside edges of the flanges (18) of the cross pieces (12) are provided with flats (20) approximately parallel to the planes of the said flanges (18), the cross pieces (12) being in contact with each other through the said flats (20).

4. Storage basket according to claim 2, in which the outside edges of the flanges (18) of the cross pieces (12) in contact with each other have complementary shapes of the tenon (22) - mortise (24) type such that they nest into each other.

5. Storage basket according to any one of claims 1 to 4, in which the tubes (10) have a prismatic square or rectangular cross section and the cross pieces (12) comprise four flanges (18) along two directions orthogonal to each other.

6. Storage basket according to any one of claims 1 to 4, in which the tubes (10) have a prismatic hexagonal cross section and the cross pieces (12) comprise three flanges (18) along three directions separated by angles of 120° .

7. Storage basket according to any one of claims 1 to 4, in which the tubes (10) have a prismatic circular cross section and the cross pieces (12) comprise four flanges (18) along two directions orthogonal to each other.

8. Storage basket according to any one of claims 1 to 7, in which the length of the cross pieces (12) is equal to approximately the length of the tubes (10).

9. Storage basket according to any one of claims 1 to 7, in which the cross pieces (12) are formed from segments of cross pieces (38) laid out end to end, so that the total length of the said segments (38) is approximately equal to the length of the tubes (10).

10. Storage basket according to any one of claims 1 to 9, in which the flanges (18) of the cross pieces (12) comprise at least two layers of distinct materials in contact with each other.

11. Storage basket according to any one of claims 1 to 10, in which the cross pieces (12) comprise at least one layer of a material chosen from the group comprising aluminium, copper and their alloys.

12. Storage basket according to any one of claims 1 to 11, in which at least one of the several tubes (10) and the several cross pieces (12) comprises a material including a neutron absorbing element.

13. Storage basket according to claim 12, in which the neutron absorbing element is chosen from the group comprising boron, hafnium and cadmium.

14. Storage basket according to claim 12, in which the neutron absorbing element is boron enriched with boron 10, to at least 80% by weight.

15. Storage basket according to any one of claims 1 to 14, in which the tubes (10) and assembly means (14) are made of materials chosen from the group consisting of stainless steels, carbon steels, aluminium and their alloys, and titanium.

16. Storage basket according to any one of claims 1 to 15, in which the assembly means (14) comprise at least two metal encircling structures (26) surrounding the bundle of tubes (10), at different levels.

17. Storage basket according to claim 16, in which the encircling structures (26) are made of a material with a thermal coefficient of expansion less than or equal to the thermal coefficient of expansion of the material from which the tubes (10) are made.

18. Storage basket according to any one of claims 1 to 15, in which the assembly means (14) comprise at least two plates (30) at different levels of the basket and connecting devices (32a, 32b) fixing the said plates (30) to each other, each plate being perforated by a network of holes (34) with the same shape as the prismatic cross section of the tubes (10), and into which the said tubes are fitted.

19. Storage basket according to claim 18, in which at least one of the plates (30) is at one end of the basket.

20. Storage basket according to either of claims 18 and 19, in which the connection devices (32a, 32b) are fixed to the plates (30) by screws (42, 44).

21. Storage basket according to any one of claims 18 to 20, in which each connecting device (32a, 32b) comprises an inner surface complementary to the outer envelope of the bundle of tubes (10) and associated cross pieces (12), and a regular outer surface forming an outer surface of the basket and providing it with a regular shape.

22. Storage basket according to any one of claims 1 to 21, in which the said basket also comprises a rigid bottom (28).
